# DEMANDE DE BREVET EUROPEEN

(11) **EP 2 638 958 A1**
(43) Date de publication de la demande: **18.09.2013**
(21) Numéro de dépôt: 13159579.5
(22) Date de dépôt: 15.03.2013
(51) Int. Cl.: B01J 8/00

(54) **Installation pour la conversion d'un produit solide friable comprenant des moyens de distribution dudit produit**

(30) Priorité: 15.03.2012 FR 1252360
(71) Demandeur: MBA Finance, 76290 Montivilliers (FR)
(72) Inventeur: Lalouelle, Stéphane, 76290 Montivilliers (FR)
(74) Mandataire: Gaillarde, Frédéric F. Ch.

(57) **Abrégé**

La présente invention concerne une installation (1) pour la conversion d'un produit solide friable comprenant :
- une unité de stockage adaptée pour la réception d'un chargement d'un produit friable,
- des moyens de distribution étanches conformés pour acheminer au moins une partie du chargement depuis une sortie (25) de l'unité de stockage vers une unité externe de traitement dudit chargement, lesdits moyens de distribution comprenant, d'une part, un tapis convoyeur (21) et, d'autre part, une manche d'introduction (18) du chargement conformée pour permettre le transfert depuis une extrémité dudit tapis convoyeur vers ladite unité externe de traitement.

L'installation selon l'invention est remarquable en ce que les moyens de distribution sont mobiles en rotation autour d'un axe (23) sensiblement perpendiculaire ou transverse à la direction de déplacement dudit chargement dans le tapis convoyeur (21).

## Description

La présente invention concerne le domaine de la conversion de produit faisant intervenir au moins un produit solide friable tel que des granulats, des produits pulvérulents, ou des produits subdivisés.

Plus précisément, l'invention se rapporte à une installation pour la conversion d'un produit solide friable.

Il s'agit par exemple d'un procédé de concassage, dans lequel un produit solide friable est destiné à être réduit en poudre. Il s'agit encore d'un procédé visant à convertir un produit grâce à un produit solide friable, par exemple un catalyseur, permettant par exemple de convertir des coupes lourdes de pétrole en coupes plus légères, ou de réaliser un procédé d'hydrodésulfuration.

Par exemple, le raffinage du pétrole est un procédé qui comprend plusieurs étapes, depuis son extraction de la roche jusqu'à son utilisation en tant que matière première pour la fabrication de produits industriels en tout genre, ou encore jusqu'à son utilisation en tant que carburant.

Le procédé de raffinage du pétrole comprend une étape d'extraction de son gisement, puis de distillation dans des colonnes spécifiques. A ce stade, le pétrole se trouve sous forme de coupes dites lourdes, c'est-à-dire constituées par de longues chaînes d'atomes de carbones. Sous cette forme, le pétrole n'est pas directement exploitable car les chaînes carbonées sont trop longues et soufrées.

Afin de rendre le pétrole utilisable par différents types d'industries, il est fréquent de réaliser une étape de conversion de ces coupes lourdes en coupes plus légères. Cette étape consiste à réduire la longueur des chaînes carbonées, ce qui permettra une manipulation plus aisée des coupes de pétrole en vue de leur utilisation à des fins industrielles.

Cette étape de conversion est généralement réalisée par un procédé de craquage thermique ou catalytique. Les procédés de craquage les plus répandus sont par exemple le craquage catalytique, l'hydrocraquage catalytique, ou encore le vapocraquage ou l'hydrodésulfuration.

Le craquage catalytique est un procédé qui permet de briser les molécules constituant le pétrole brut grâce notamment à l'adjonction d'un catalyseur dans le réacteur.

Le catalyseur, bien connu par l'homme du métier, a pour but d'accélérer ou de rendre possible une réaction chimique thermodynamiquement longue ou impossible. En chimie du pétrole, le catalyseur permet notamment d'augmenter sensiblement la quantité de produit obtenu à partir d'une quantité donnée de réactif.

On connaît les catalyseurs sous forme solide, liquide ou sous forme de poudre. Dans le domaine du raffinage du pétrole, on utilise souvent dans le cas d'hydrodésulfuration des catalyseurs solides, se présentant sous la forme de bâtonnets, par exemple d'alumine, de cobalt, de nickel, de vanadium, ou encore de chrome.

Le procédé de craquage est typiquement réalisé dans une unité de craquage catalytique et d'hydrodésulfuration. A cet effet, il est connu de disposer le catalyseur dans une trémie de stockage positionnée au-dessus du réacteur dans lequel sera réalisée la désulfuration.

Un inconvénient lié à ce type de catalyseur est que ces bâtonnets sont friables. Lors du transport du catalyseur depuis son usine de fabrication jusqu'au réacteur, les bâtonnets de catalyseur sont sollicités mécaniquement, entraînant alors l'apparition de poussières et de brisures de catalyseur à base d'alumine activée de nickel, cobalt, chrome, vanadium, etc., produits extrêmement toxiques car cancérogènes.

Lorsque le catalyseur est introduit dans le réacteur depuis sa trémie de stockage par l'utilisation d'une manche de chargement, le catalyseur descend par gravité à l'intérieur de cette manche. Des opérateurs présents à l'intérieur du réacteur assurent une répartition plane du catalyseur afin d'éviter la formation de talus, notamment au moyen d'outils mécaniques de distribution dans le réacteur. Ces opérateurs se trouvent donc, au moins pendant la durée de chargement du réacteur en catalyseur, exposés aux poussières et brisures de catalyseur néfastes pour la santé.

Par ailleurs, le réacteur, adoptant une forme sensiblement cylindrique, peut présenter un diamètre compris entre 1,5 mètres et 6 mètres, pour une profondeur pouvant parfois atteindre près de 50 mètres. Le travail dans ce type de réacteur peut conférer aux opérateurs une sensation d'étouffement, et il n'est pas rare de voir certains opérateurs frappés de malaises. La trémie étant habituellement placée au dessus du trou d'homme à l'intérieur du réacteur, elle constitue un obstacle au secours de ces personnes accidentées. Dans ce cas fréquent d'accident, la trémie est retirée grâce à une grue pour permettre aux secouristes d'avoir un accès au réacteur. On comprend facilement que dans de telles conditions sévères de travail, il est périlleux de procéder aux opérations de sauvetage, pouvant s'avérer très longues pour les personnes accidentées et périlleuses pour les secouristes.

La présente invention a pour but de résoudre les inconvénients liés aux mauvaises conditions de travail et de sécurité précitées.

Avant de poursuivre la description, on notera que l'installation selon l'invention est destinée à mettre en oeuvre, de manière préférée, un procédé d'hydrotraitement et de traitement de charge, tel qu'un procédé d'hydrodésulfuration, mais peut bien sûr comme précédemment décrit être utilisée pour mettre en oeuvre tout autre procédé, notamment de concassage, visant à transformer un matériau solide friable sous forme de bloc en un matériau sous forme de poudre.

A cet effet, la présente invention se rapporte à une installation pour la conversion d'un produit solide friable comprenant :
- une unité de stockage adaptée pour la réception d'un chargement d'un produit friable,
- des moyens de distribution étanches conformés pour acheminer au moins une partie du chargement depuis une sortie de l'unité de stockage vers une unité externe de traitement dudit chargement, lesdits moyens de distribution comprenant, d'une part, un tapis convoyeur et, d'autre part, une manche d'introduction du chargement conformée pour permettre le transfert depuis une extrémité dudit tapis convoyeur vers ladite unité externe de traitement,
ladite installation étant remarquable en ce que les moyens de distribution sont mobiles en rotation autour d'un axe sensiblement perpendiculaire ou transverse à la direction de déplacement dudit chargement dans le tapis convoyeur.

Ainsi, les moyens de distribution sont mobiles en rotation entre une position dite de travail selon laquelle lesdits moyens sont aptes à permettre une alimentation d'une unité externe de traitement, et une position dite d'évacuation, selon laquelle le trou d'homme de l'unité de traitement est totalement dégagé de façon à permettre un accès aisé à l'intérieur de l'unité externe de traitement.

Selon une disposition de l'installation selon l'invention, l'axe de rotation des moyens de distribution est sensiblement confondu avec l'axe longitudinal de l'unité de stockage.

L'unité de stockage comprend au moins une trémie de stockage présentant au moins une partie supérieure ouverte pour l'introduction du chargement et au moins une partie inférieure apte à être ouverte/ fermée grâce à des moyens d'ouverture/ de fermeture de ladite trémie.

Selon une caractéristique de l'installation, la trémie de stockage comprend une grille de retenue positionnée à proximité de la partie supérieure de ladite trémie, et s'étendant au moins en partie vers une partie interne de ladite trémie.

Cette caractéristique permet d'éviter la chute accidentelle d'objets indésirables à l'intérieur de la trémie de stockage.

Par ailleurs, la trémie de stockage est supportée par au moins une structure de maintien comprenant au moins une passerelle agencée en périphérie de la partie supérieure de ladite trémie.

La passerelle intégrée à la structure de maintien de la trémie permet aux opérateurs d'avoir accès de manière sécurisée à la partie supérieure de la trémie, afin de pouvoir par exemple superviser son remplissage en chargement.

Avantageusement, la structure de maintien comprend au moins une potence s'étendant sensiblement en direction de la manche d'introduction du chargement.

De plus, la potence de la structure de maintien est conformée pour supporter au moins un dispositif externe de levage destiné à réaliser au moins une opération de sauvetage dans l'unité externe de traitement du chargement.

Ainsi, la potence s'étendant en direction de la manche d'introduction destinée à pénétrer dans l'unité externe de traitement, la potence peut avantageusement être équipée d'un dispositif externe de levage destiné à secourir une personne accidentée dans l'unité de traitement, sans avoir recours à une installation de secours supplémentaire.

Selon une autre caractéristique de l'installation selon l'invention, la structure de maintien comprend des moyens de préhension de ladite installation.

Les moyens de préhension, positionnés par exemple en partie supérieure de la structure, permettent le transport aisé de l'installation grâce à un dispositif externe de levage.

Selon encore une autre caractéristique de l'invention, la manche d'introduction est solidaire du tapis convoyeur ou de la potence de la structure de maintien.

De plus, les moyens de distribution comprennent des moyens d'évacuation du chargement conformés pour prélever par aspiration au moins une partie dudit chargement puis pour rejeter ladite partie vers une unité externe de confinement.

Enfin, la manche d'introduction du chargement comprend au moins une toile de tri dudit chargement.

Ainsi, les poussières toxiques sont en grande partie aspirées avant de pénétrer dans l'unité de traitement à l'intérieur de laquelle des opérateurs peuvent travailler, ce qui permet de limiter l'exposition des opérateurs aux poussières néfastes.

D'autres caractéristiques, buts et avantages de la présente invention, apparaîtront à la lecture de la description détaillée qui va suivre, selon les modes de réalisation donnés à titre d'exemples non limitatifs, et en référence aux dessins annexés sur lesquels :
- la figure 1 est une vue schématique générale de l'installation selon l'invention ;
- la figure 2 représente l'installation en vue de dessus, les moyens de distribution étant en position de travail ;
- la figure 3 est une vue similaire à celle de la figure 2, les moyens de distribution étant en position d'évacuation ;
- la figure 4 est une vue de détail des moyens d'évacuation selon l'invention.

Sur l'ensemble des figures, des références identiques ou analogues désignent des organes ou ensembles d'organes identiques ou analogues.

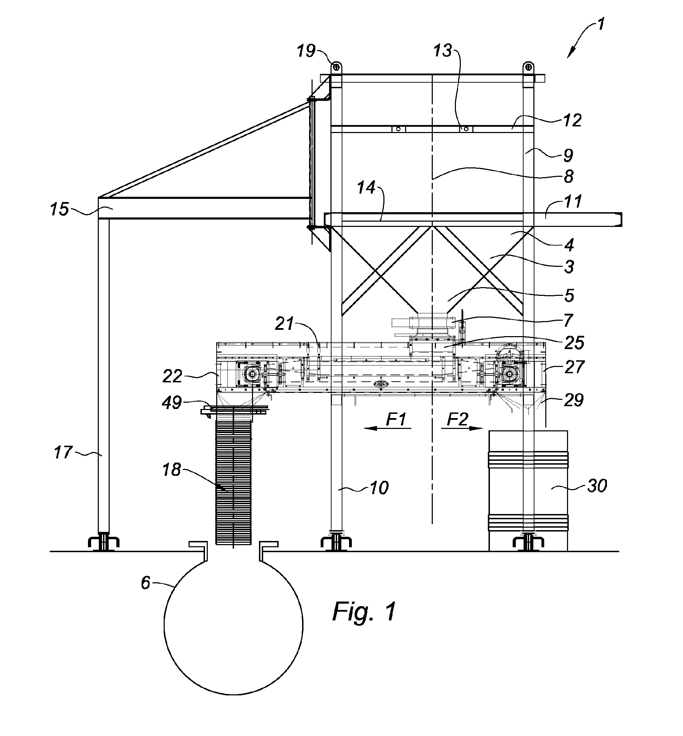

On se réfère à la figure 1, illustrant schématiquement l'installation selon l'invention. L'installation 1 comprend une unité de stockage constituée comme représenté par une trémie de stockage 3 destinée à recevoir en sa partie supérieure 4 un chargement non représenté. Le chargement est placé temporairement dans la trémie 3 destinée à être vidangée par sa partie inférieure 5. La trémie est de manière connue réalisée en acier, plastique ou inox, voire en tissu. Il n'est bien évidemment pas exclu que l'unité de stockage se présente sous une forme différente de celle définie par la trémie 3, comme par exemple une cuve comprenant des moyens permettant sa vidange, ou encore que la trémie soit réalisée en tout autre matériau que ceux précités.

En fonction du procédé que l'on souhaite mettre en oeuvre grâce à l'installation selon l'invention, un tel chargement peut être constitué par exemple par un catalyseur destiné à favoriser ou rendre possible une réaction qui se déroulera dans une unité de traitement tel qu'un réacteur 6 externe à ladite installation, ou peut par exemple également être constitué par un produit solide friable à convertir, une poudre ou un produit subdivisé.

La trémie adopte classiquement la forme d'un entonnoir dont la partie inférieure 5, d'ouverture réduite par rapport à la partie supérieure 4 qui permet l'introduction du chargement, est apte à être ouverte et fermée à volonté grâce à une vanne guillotine 7 commandant la vidange de la trémie. La vidange de la trémie peut bien entendu être réalisée par tout autre moyen permettant l'ouverture/ fermeture de la partie inférieure afin de permettre une extraction par gravité du chargement contenu dans la trémie.

Les parties supérieure 4 et inférieure 5 de la trémie sont alignées par rapport à un axe longitudinal 8 de la trémie 3. Toutefois, la partie inférieure 5 peut être décentrée dudit axe longitudinal si l'homme du métier y trouve un intérêt particulier.

La trémie 3 est maintenue en altitude à une distance prédéterminée du sol grâce à une structure de maintien 9.La structure de maintien peut être réalisée en tout matériau adapté pour supporter le poids de la trémie 3.

En sa partie inférieure, la structure de maintien 9 comprend des pieds 10 avantageusement télescopiques de façon à permettre un agencement variable de ladite structure, l'agencement dépendant du type et de la forme du sol sur lequel elle repose. Par ailleurs, la structure 9 comprend également une passerelle 11 située sensiblement autour de la partie supérieure 4 de la trémie. Cette passerelle permet à un opérateur de pouvoir éventuellement intervenir sur le chargement lors de son introduction dans la trémie depuis sa cuve de stockage.

En sa partie supérieure, la structure de maintien 9 reçoit avantageusement un toit de protection 12 du chargement agencé pour protéger le chargement contre l'humidité, certains types de catalyseurs y étant très sensibles. Le toit de protection peut être souple et est par exemple constitué d'une bâche que l'on vient rapporter en partie supérieure de la structure, au dessus de la trémie, ou bien rigide, et est dans ce cas directement intégré à la structure 9.

Par ailleurs, il est prévu d'équiper la partie supérieure de la structure 9 d'un dispositif de diffusion de gaz inerte tel que du diazote. A cet effet, des buses de diffusion 13 sont positionnées autour de la partie de la structure supportant le toit de protection 12. L'introduction de gaz inerte dans l'espace défini entre la partie supérieure 4 de la trémie 3 et le toit de protection 12 permet au catalyseur de mieux résister à l'humidité et d'éviter l'oxydation par l'air.

La structure de maintien 9 de la trémie 3 est également équipée en sa partie supérieure, sensiblement au-dessus de la partie supérieure 4 de la trémie, d'une grille de retenue 14 permettant de stopper la chute accidentelle d'objets à l'intérieur de la trémie.

En outre, la structure de maintien 9 de la trémie est avantageusement équipée d'une échelle (non représentée) permettant un accès aisé et sécurisé à la partie supérieure 4 de la trémie constituant la zone de remplissage de la trémie.

La structure de maintien 9 comprend par ailleurs une potence 15 adoptant sensiblement la forme d'un « demi T ». La forme de la potence 15 peut bien sûr être toute autre si l'homme du métier y trouve un intérêt particulier, et peut à cet effet présenter une forme de « H » ou de « I » par exemple. La potence 15 comprend un monorail dont une extrémité est solidaire d'un pied 17, de préférence télescopique. La potence 15 s'étend sensiblement dans le prolongement de la passerelle 11, vers une manche d'introduction 18 du chargement dans l'unité externe de traitement, dont sa fonction est expliquée plus en détail dans la suite de la description.

La potence 15 est destinée à recevoir un ou plusieurs dispositifs de levage et de descente tels qu'un treuil (non représenté). Son positionnement sensiblement au-dessus du réacteur externe 6 permet ainsi de disposer immédiatement d'un dispositif de secours permettant de pouvoir extraire rapidement une personne accidentée dans le réacteur 6, par exemple suite à une chute ou à un malaise. En outre, de tels dispositifs externes de levage peuvent également être utilisés notamment pour réaliser diverses opérations de manutention, telles que par exemple la gestion du matériel de chargement ou d'outils mécaniques pour le personnel de maintenance.

Enfin, selon l'invention, la structure de maintien 9 comprend en sa partie supérieure des moyens de préhension constitués par une pluralité d'anneaux 19 destinés à être raccrochés par l'intermédiaire d'élingues (non représentées) à un dispositif externe de levage (non représenté). Cet agencement de la structure de maintien est notamment utilisé pour pouvoir soulever l'installation afin de la positionner sur un véhicule en vue de son transport.

L'installation 1 selon l'invention comprend des moyens de distribution du chargement. Les moyens de distribution permettent de transférer depuis la trémie de stockage 3 vers le réacteur externe 6 le chargement temporairement stocké dans la trémie. Les moyens de distribution sont constitués par un tapis convoyeur 21 à une extrémité de traitement 22 duquel est prévue la manche 18 destinée à introduire le chargement dans le réacteur externe 6.

Le tapis convoyeur 21 est sensiblement positionné sous la partie inférieure 5 de la trémie 3. Le sens de déplacement du tapis convoyeur est sensiblement perpendiculaire à l'axe longitudinal 8 de la trémie 3. Tel que représenté sur la figure 1, le sens de déplacement du tapis convoyeur est sensiblement horizontal.

Selon une variante non représentée de l'installation selon l'invention, le sens de déplacement du tapis convoyeur est sensiblement parallèle à l'axe longitudinal de la trémie. Ainsi, pour une trémie positionnée telle qu'elle est représentée en figure 1, le sens de déplacement du tapis convoyeur est sensiblement vertical.

Selon encore une autre variante de réalisation de l'installation, les moyens de distribution comprennent une manche de raccordement reliant la partie inférieure de la trémie à une manche destinée à être directement plongée dans le réacteur (variante non représentée sur les figures).

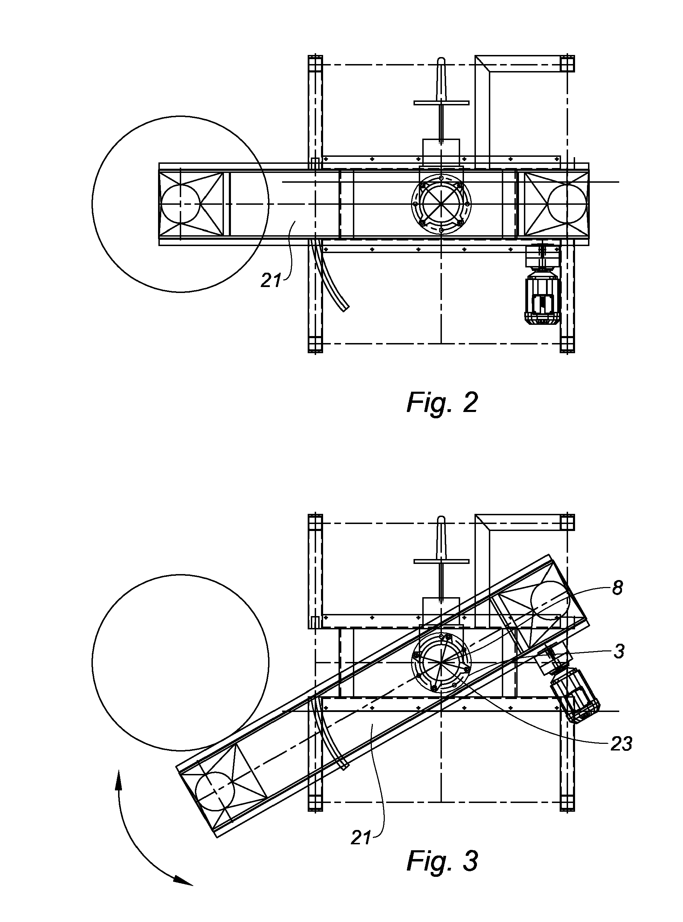

On se réfère à présent aux figures 2 et 3, illustrant en vue de dessus l'installation selon l'invention.

La figure 2 illustre en vue de dessus l'installation munie des moyens de distribution dont le tapis convoyeur 21 se trouve dans une position dite de transport.

La figure 3 illustre le tapis convoyeur 21 représenté cette fois dans une position dite d'évacuation. A cet effet, le tapis convoyeur 21 est mobile en rotation autour d'un axe 23 sensiblement confondu avec l'axe longitudinal 8 de la trémie 3. Dans une telle position dite d'évacuation, l'accès au trou d'homme de l'une unité de traitement est amélioré, ce qui permet de faciliter le sauvetage d'une personne accidentée dans l'unité de traitement.

Plus généralement, on définit l'axe de rotation du tapis convoyeur comme étant perpendiculaire à une direction de déplacement du chargement sur le tapis 21. Ainsi, l'axe de rotation est sensiblement vertical.

Selon une variante non représentée, l'axe de rotation des moyens de distribution est transverse à l'axe défini par le sens de déplacement du tapis convoyeur. Selon cette variante, l'axe transverse se trouve sensiblement horizontal.

Bien sûr, l'installation n'est pas restreinte aux axes de rotation précités, mais l'axe de rotation du tapis convoyeur peut être défini comme étant positionné à volonté de sorte que la mise en rotation du tapis entraîne le dégagement du trou d'homme de l'unité de traitement.

Le tapis convoyeur 21 est de manière préférée réalisé selon les caractéristiques décrites dans le brevet français publié sous le numéro FR 2 283 070.

A cet effet, le tapis convoyeur 21 comprend un tube à l'intérieur duquel se déplace une bande transporteuse sans fin. La bande est réalisée de manière préférée en caoutchouc, et peut être lisse ou à tasseaux. La bande est renfermée à l'intérieur du tube et adopte sensiblement la forme d'une auge.

La bande passe à chaque extrémité du tube autour de tambours dont l'un est solidaire d'une poulie entrainée à l'aide d'un moteur électrique, pneumatique ou hydraulique. Le caractère lisse de la bande permet avantageusement de réduire les sollicitations mécaniques du chargement circulant à l'intérieur du tube.

La vitesse de défilement de la bande transporteuse est variable, ce qui permet de maîtriser le volume de produit convoyé.

Par ailleurs, le tapis convoyeur dispose avantageusement de moyens de diffusion de gaz inerte à l'intérieur du tube.

En outre, le tapis convoyeur 21 dispose d'un module de gestion du sens de déplacement, permettant de sélectionner selon deux directions F1 et F2, représentées en figure 1, le sens de déplacement dudit tapis.

Un déplacement du tapis convoyeur 21 selon la direction F1 permet d'acheminer le chargement depuis une sortie 25 de la trémie 3 vers une extrémité de traitement 22 dudit tapis.

Selon un autre mode de réalisation, un déplacement du tapis convoyeur 21 selon la direction F2 permet d'acheminer le chargement depuis la sortie 25 de la trémie vers une extrémité de récupération 27 solidaire d'une manche de récupération 29 du tapis convoyeur débouchant à proximité d'une unité externe de récupération 30, par exemple constituée par une cuve ou un bidon et permettant la récupération d'une partie du chargement non utilisé pour une réaction en cours. Ce mode de réalisation et les avantages qu'il confère sont expliqués en détail dans la suite de la description.

L'installation 1 selon l'invention est destinée à alimenter en chargement l'unité de traitement externe à l'installation. Ladite unité de traitement permet de réaliser une opération visant à transformer le chargement initialement présent dans la trémie 3.

Il peut s'agir par exemple d'une opération de remplissage du réacteur en vue de réaliser un procédé d'hydrodésulfuration, le chargement étant constitué par un catalyseur solide friable, et le produit à traiter étant constitué par du pétrole issu d'une phase de distillation après extraction de son gisement. Dans ce cas et comme représenté en figure 1, l'unité de traitement est constituée par un réacteur 6 comprenant de manière connue une pluralité d'étages, chacun étant conformé pour supporter une réaction particulière.

Il peut également s'agir d'une opération de concassage, le chargement étant alors constitué directement par le produit à traiter. Une opération de concassage s'applique à tout matériau solide, de préférence friable, que l'on souhaite réduire en particules fines ou en coupe réduite. Ce matériau peut être solide dans son état naturel ou après une opération préalable qui a entraîné la formation d'un produit solide. Dans ce cas, l'unité de traitement est constituée par une cuve munie de moyens de concassage.

L'extrémité de traitement 22 du tapis convoyeur 21 est solidaire d'une manche 18 d'introduction du chargement. La manche permet d'introduire dans le réacteur le chargement acheminé depuis la trémie par le tapis convoyeur.

Alternativement, la manche 18 peut être non pas solidaire du tapis convoyeur 21 mais de la potence 15, permettant alors un bon alignement de la manche et de l'axe longitudinal du réacteur.

La manche 18 peut également, selon une autre variante, être solidaire de la structure de maintien 9 de la trémie 3.

La manche 18 est de préférence réalisée en matériau souple tel que du tissu ou du caoutchouc, mais peut tout à fait être réalisée en matériau rigide tel que de l'aluminium si nécessaire. La manche 18 présente une section de préférence circulaire, mais peut également adopter une section de géométrie différente, en particulier ovale ou rectangulaire, si l'homme du métier y trouve un intérêt particulier.

La manche 18 est pourvue de moyens permettant l'évacuation par aspiration des particules fines telles que les poussières et les brisures de catalyseur.

Ces moyens sont constitués par au moins un aspirateur de particules fines.

Un tel aspirateur de particules fines, couramment appelé « défineur », a pour effet d'enlever les poussières et les brisures de la charge du catalyseur à charger dans le réacteur, ces poussières et brisures ayant été créées lors du transport du catalyseur depuis son usine de fabrication jusqu'à sa trémie de stockage.

Le dimensionnement de l'aspirateur de particules fines est réalisé en fonction du type de produit à traiter, plus précisément en fonction de sa densité, des formes géométriques qu'il présente, de sa granulométrie, de sa matière, etc.

Un tel aspirateur présente une forme généralement cylindrique, mais peut bien évidemment adopter une toute autre forme géométrique, par exemple rectangulaire ou ovale.

Les moyens d'évacuation sont de préférence réalisés en acier, mais peuvent tout à fait être réalisés en toute autre matière rigide, ou encore en matière souple telle que du tissu par exemple.

Le pourcentage d'extraction des poussières et brisures toxiques est fonction du nombre d'aspirateurs que l'installation comprend.

Ainsi, l'installation comprend une pluralité d'aspirateurs disposés en série le long de la manche 18 d'introduction de chargement.

Selon un mode de réalisation préféré, un premier aspirateur de particules fines est positionné à proximité de l'extrémité de traitement 22 du tapis convoyeur 21, ce qui permet de réaliser une première opération de purification du catalyseur.

Ensuite, le catalyseur est déversé dans la manche d'introduction 18 équipée elle-même d'une pluralité d'aspirateurs de particules fines, ce qui permet de poursuivre l'opération de purification du catalyseur avant son introduction dans le réacteur externe.

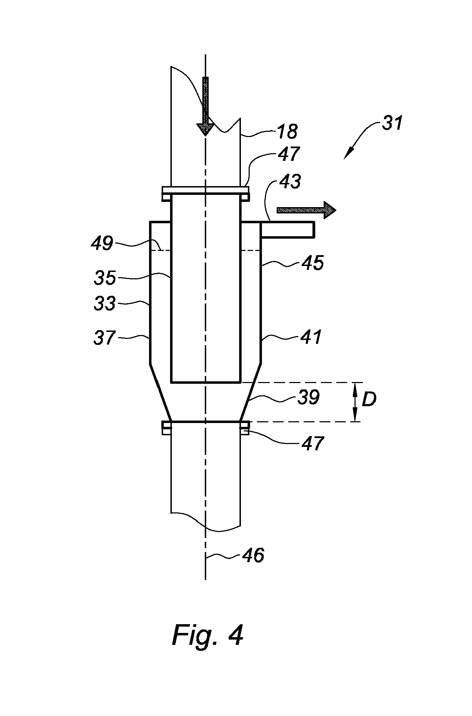

En se référant à la figure 4, un tel aspirateur de particules fines 31 est constitué d'un corps 33 comprenant :
- un tube 35 dans le prolongement de la manche 18 de chargement dans laquelle s'écoule le catalyseur ;
- une enveloppe périphérique 37 formée par un tube renfermant partiellement le tube 35 ;
- un cône 39, en extrémité basse 41 de l'aspirateur 31, permettant de raccorder ledit aspirateur à la manche.

Le corps de l'aspirateur est relié à un ou plusieurs moyens d'extraction 43 situés à proximité de l'extrémité haute 45 du corps 33 de l'aspirateur, et créant une dépression dans ledit corps.

Alternativement, la dépression dans le corps de l'aspirateur peut être créée par tout moyen mécanique, tel qu'une vanne papillon (non représentée) par exemple.

En outre, le tube 35 est mobile par rapport à l'enveloppe périphérique 37, sensiblement le long de l'axe longitudinal 46 de l'aspirateur.

La mobilité est assurée par un système mécanique tel qu'un système à crémaillères par exemple.

Le positionnement du tube 35 à différentes hauteurs de l'enveloppe périphérique 37 permet de modifier la distance D correspondant à la distance séparant la partie extrême de l'enveloppe externe de la partie extrême du tube 35.

Le positionnement du tube 35 dans l'enveloppe périphérique 37 permet de réguler le taux d'aspiration, ce dernier étant inversement proportionnel à la distance D choisie.

Les moyens d'extraction 43 sont constitués de cyclones reliés à une unité de confinement (non représentée) installée de manière préférée dans un véhicule apte à transporter ces poussières toxiques dans des centres spécialisés dans le traitement des déchets toxiques. Ceci permet de disposer d'une installation respectueuse de l'environnement.

Le tube et le cône du corps de l'aspirateur sont munis en leurs extrémités haute et basse de systèmes mécaniques 47 tels que des brides de liaison permettant l'assemblage de l'aspirateur avec la manche de chargement.

En outre, une toile de tri 49 est installée au niveau de l'extrémité haute 45 du corps de l'aspirateur. Ainsi, l'installation comprend une pluralité de toiles de tri, dont le nombre est égal au nombre d'aspirateurs à particules.

La toile 49 permet d'éviter l'extraction de particules dont la taille serait supérieure à celle des particules que l'on souhaite extraire.

La toile de tri est conformée pour éviter de soumettre le chargement à de nouvelles sollicitations mécaniques lors de son passage dans lesdites toiles, ce qui aurait pour effet de créer une attrition du produit.

Ainsi, une telle toile fonctionne comme un crible et présente un maillage permettant l'extraction des fines et brisures sans pour autant extraire l'ensemble du produit.

Selon une alternative, la toile de tri est renfermée dans le tapis convoyeur 21, positionnée à proximité de l'extrémité de traitement 22 dudit tapis.

La description qui suit présente un exemple d'utilisation de l'installation selon l'invention, à partir de laquelle on réalise un procédé d'hydrodésulfuration.

On se réfère à nouveau à la figure 1.

Le catalyseur est initialement contenu dans une cuve de stockage externe à l'installation selon l'invention. Le catalyseur dépendra du type de réaction envisagé, et adopte typiquement la forme de bâtonnets solides friables. Par exemple, il peut s'agir de bâtonnets à base d'alumine activée de nickel, de cobalt, de vanadium, de chrome, etc.

On remplit la trémie 3 par exemple à l'aide d'un tapis convoyeur muni d'une manche de raccordement par exemple équipée en son extrémité d'un dispositif pour l'ouverture et la vidange automatique ou semi-automatique sans émission de poussières tel qu'un « Grand Récipient Vrac Souple » (GRVS) contenant des granulats ou des produits pulvérulents, dont le fonctionnement est décrit dans le brevet français publié sous le numéro FR 2 923 464.

Le catalyseur stocké dans la trémie 3 est protégé des intempéries grâce au toit de protection 12 et au dispositif de diffusion de gaz inerte entre la partie supérieure 4 de la trémie 3 et ledit toit de protection.

Ce catalyseur est destiné à interagir dans le réacteur avec des chaînes d'hydrocarbure afin de retirer le souffre du gasoil par exemple. Une fois que la trémie 3 a été chargée en catalyseur en quantité souhaitée, un opérateur vidange son contenu par l'ouverture de la vanne guillotine 7. Le catalyseur se déverse alors sur le tapis convoyeur étanche 21, se déplaçant initialement selon le sens de déplacement F1, entraînant le catalyseur depuis la sortie de la trémie de stockage vers l'entrée de la manche 18 d'introduction dans le réacteur 6.

Lors de ces différents transferts, les bâtonnets ont été sollicités mécaniquement, ce qui a entraîné, comme précédemment décrit, l'apparition de poussières et brisures extrêmement toxiques car cancérogènes et néfastes au bon fonctionnement de l'installation.

Lorsque le catalyseur arrive au niveau de l'extrémité de traitement 22 du tapis convoyeur 21, il pénètre dans la manche 18 et descend par gravité à l'intérieur de ladite manche. Les poussières, en flottaison, sont aspirées grâce aux aspirateurs de particules fines comme précédemment décrit, permettant de purifier le catalyseur des impuretés créées par la sollicitation mécanique.

A titre indicatif, les moyens d'évacuation permettent de supprimer de 10 à 90% de particules fines néfastes avant d'entrer dans le réacteur externe 6. Le pourcentage de purification du catalyseur est d'une part dépendant du taux de pollution initial des particules fines, et d'autre part du nombre d'aspirateurs de particules fines que comprend l'installation selon l'invention. Ainsi, il est tout à fait possible d'avoir un pourcentage de purification non compris dans l'intervalle précité. Par exemple, en présence de trois ou quatre aspirateurs de particules, il est tout à fait possible d'obtenir une purification du catalyseur atteignant au moins 95%.

Ceci permet aux opérateurs, présents dans le réacteur et s'assurant de la répartition homogène du catalyseur afin d'éviter la formation de talus, de charger le réacteur de catalyseur ayant une bonne granulométrie et de travailler dans un environnement sensiblement plus sain que celui connu de l'art antérieur.

Une fois le catalyseur introduit en quantité appropriée, la charge à traiter est introduite par l'intermédiaire d'injecteurs non représentés et connus de l'homme du métier.

Comme précédemment décrit, la structure de maintien de la trémie comprend une potence 15 destinée au support d'un dispositif externe de levage. Cet agencement de la structure de maintien de la trémie permet de disposer dans le cas où des personnes se trouvent accidentées dans l'unité de traitement, de moyens de secours autonomes, permettant par conséquent de supprimer le délai d'installation de moyens de secours supplémentaires spécifiques tel qu'une grue, et d'éviter d'avoir à retirer la trémie de chargement. Ainsi, la sécurité de l'installation est grandement améliorée.

En outre, selon l'invention, le tapis convoyeur 21 comprend une direction de déplacement F2, permettant d'introduire le catalyseur dans l'unité externe de récupération 30, ce qui permet de ne pas interrompre le cycle de préparation de chargement de la trémie lorsque le chargement doit être changé.

Ceci permet avantageusement de pouvoir préparer un catalyseur de composition différente à celui qui est en train d'être vidangé, en même temps que l'on procède à la vidange de la trémie.

A cet effet, on utilise l'installation selon l'invention afin de réaliser le procédé de changement de chargement décrit par les étapes suivantes visant à :
- remplir au moins en partie l'unité de stockage par un premier chargement ;
- vidanger au moins une partie dudit premier chargement ;
- acheminer ladite partie du premier chargement depuis la sortie de l'unité de stockage vers l'extrémité de traitement 22 du tapis convoyeur 21 ;
- déverser ladite partie du premier chargement dans une unité externe de traitement ;
- inverser le sens de déplacement du tapis convoyeur 21 lorsque le premier chargement a été introduit en quantité souhaitée dans l'unité de traitement ;
- préparer le remplissage de l'unité de stockage par un deuxième chargement pendant la phase de vidange du premier chargement ;
- acheminer une deuxième partie du premier chargement depuis la sortie 25 de l'unité de stockage vers l'extrémité de récupération 27 du tapis convoyeur 21 ;
- déverser ladite deuxième partie de premier chargement dans une unité externe de récupération 30 jusqu'à ce que l'unité de stockage ne contienne plus de premier chargement ;
- déverser le deuxième chargement dans la trémie de stockage.

L'étape du procédé visant à préparer le remplissage de l'unité de stockage par un deuxième chargement pendant la phase de vidange du premier chargement doit être comprise comme étant l'étape qui précède le remplissage de la trémie par le deuxième chargement lorsque l'intégralité du premier aura été vidangée.

La mise à disposition du deuxième chargement alors même que le premier chargement demeure encore au moins en partie dans l'unité de stockage permet d'éviter d'avoir à retirer la trémie de sa structure de support.

Ainsi, on n'est plus obligé d'arrêter l'opération de chargement de catalyseur, et par conséquent on supprime l'ensemble des inconvénients liés à l'arrêt du chantier de chargement.

Ainsi, l'opération de changement de catalyseur se trouve facilitée, et la durée de changement de catalyseur est considérablement réduite.

Grâce à l'installation selon l'invention, la sécurité de ce type d'installation se trouve considérablement augmentée.

En effet, l'accès à l'unité de traitement se trouve facilité selon l'art antérieur, ce qui permet de pouvoir procéder plus rapidement à des opérations de secours.

La structure de maintien de l'unité de stockage permet à l'installation selon l'invention de présenter un caractère autonome en termes de sécurité, c'est-à-dire que les moyens de sauvetage et d'intervention au sein de l'unité de traitement sont avantageusement préinstallés dans la structure de maintien, ce qui permet un gain de temps essentiel lorsque des personnes sont accidentées dans l'unité de traitement.

Par ailleurs, l'installation selon l'invention améliore sensiblement la qualité de travail des opérateurs travaillant dans l'unité de traitement. Les opérateurs se trouvent, grâce à l'invention, sensiblement moins exposés par rapport à l'art antérieur aux poussières de chargement toxiques.

Enfin, comme il va de soi, l'invention ne se limite pas aux seules formes de réalisation de l'installation, décrites ci-dessus à titre d'exemples, mais elle embrasse au contraire toutes les variantes.

## Revendications

1. Installation (1) pour la conversion d'un produit solide friable comprenant :
- une unité de stockage adaptée pour la réception d'un chargement d'un produit friable,
- des moyens de distribution étanches conformés pour acheminer au moins une partie du chargement depuis une sortie (25) de l'unité de stockage vers une unité externe de traitement dudit chargement, lesdits moyens de distribution comprenant, d'une part, un tapis convoyeur (21) et, d'autre part, une manche d'introduction (18) du chargement conformée pour permettre le transfert depuis une extrémité dudit tapis convoyeur vers ladite unité externe de traitement,
ladite installation étant **caractérisée en ce que** les moyens de distribution sont mobiles en rotation autour d'un axe (23) sensiblement perpendiculaire ou transverse à la direction de déplacement dudit chargement dans le tapis convoyeur (21).

2. Installation (1) selon la revendication 1, **caractérisée en ce que** l'axe de rotation (23) des moyens de distribution est sensiblement confondu avec l'axe longitudinal (8) de l'unité de stockage.

3. Installation (1) selon l'une quelconque des revendications 1 ou 2, **caractérisée en ce que** l'unité de stockage comprend au moins une trémie de stockage (3) présentant au moins une partie supérieure (4) ouverte pour l'introduction du chargement et au moins une partie inférieure (5) apte à être ouverte/ fermée grâce à des moyens d'ouverture/ de fermeture de ladite trémie.

4. Installation (1) selon la revendication 3, **caractérisée en ce que** la trémie de stockage (3) comprend une grille de retenue (14) positionnée à proximité de la partie supérieure (4) de ladite trémie, et s'étendant au moins en partie vers une partie interne de ladite trémie.

5. Installation (1) selon l'une quelconque des revendications 3 ou 4, **caractérisée en ce que** la trémie de stockage (3) est supportée par au moins une structure de maintien (9) comprenant au moins une passerelle (11) agencée en périphérie de la partie supérieure (4) de ladite trémie.

6. Installation (1) selon la revendication 5, **caractérisée en ce que** la structure de maintien (9) comprend au moins une potence (15) s'étendant sensiblement en direction de la manche d'introduction (18) du chargement.

7. Installation (1) selon la revendication 6, **caractérisée en ce que** la potence (15) de la structure de maintien (9) est conformée pour supporter au moins un dispositif externe de levage destiné à réaliser au moins une opération de sauvetage dans l'unité externe de traitement du chargement.

8. Installation (1) selon l'une quelconque des revendications 5 à 7, caractérisée ce que la structure de maintien (9) comprend des moyens de préhension de ladite installation.

9. Installation (1) selon l'une quelconque des revendications 5 à 8, **caractérisée en ce que** la manche d'introduction (18) est solidaire du tapis convoyeur (21) ou de la potence (15) de la structure de maintien (9).

10. Installation (1) selon l'une quelconque des revendications 1 à 9, **caractérisée en ce que** les moyens de distribution comprennent des moyens d'évacuation du chargement conformés pour prélever par aspiration au moins une partie dudit chargement puis pour rejeter ladite partie vers une unité externe de confinement.

11. Installation (1) selon l'une quelconque des revendications 1 à 10, **caractérisée en ce que** la manche d'introduction du chargement comprend au moins une toile de tri (49) dudit chargement.
